# EUROPEAN PATENT SPECIFICATION

(11) **EP 2 908 584 B1**
(45) Date of publication and mention of the grant of the patent: **02.11.2016**
(21) Application number: 14200401.9
(22) Date of filing: 29.12.2014
(51) Int. Cl.: H04W 24/00, H04L 12/18, H04W 72/00, H04W 4/06, H04W 28/02

(54) **Methods of performing MBMS counting procedure in a wireless communication system**
Verfahren zur Durchführung von MBMS-Zählungsverfahren in einem drahtlosen Kommunikationssystem
Procédés pour effectuer une procédure de comptage MBMS dans un système de communication sans fil

(30) Priority: 12.02.2014 US 201461938702 P; 24.07.2014 TW 103125325
(43) Date of publication of application: 19.08.2015
(73) Proprietor: Acer Incorporated, New Taipei City 221 (TW)
(72) Inventor: Lin, Miao-Er, 221 New Taipei City (TW)
(74) Representative: Straus, Alexander

(56) References cited:
- US-A1- 2006 094 408
- US-A1- 2012 202 493
- US-A1- 2013 107 784
- ERICSSON ET AL: "Counting for MBMS Rel-10", 3GPP DRAFT; R2-103865 COUNTING FOR MBMS REL-10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451268, [retrieved on 2010-06-22]

## Description

### Field of the Invention

The present invention is related to a method of performing an MBMS counting procedure in a wireless communication system for requesting user equipment operating in a specific mode to respond.

### Background of the Invention

The 3rd Generation Partnership Project (3GPP) has developed a universal mobile telecommunications system (UMTS) which adopts a wideband code division multiple access (WCDMA) technology capable of providing high frequency spectrum utilization, universal coverage, and high-speed/quality multimedia data transmission. In the UMTS, a radio access network known as a universal terrestrial radio access network (UTRAN) includes multiple base stations, commonly known as Node-Bs (NBs), for communicating with multiple user equipment (UE). Furthermore, a long-term evolution (LTE) system is now being developed by the 3GPP in order to further improve performance of the UMTS to satisfy users' increasing needs. The LTE system includes a new radio interface and radio network architecture which provides a high data rate, low latency, packet optimization, and improved system capacity and coverage. In the LTE system, a radio access network known as an evolved UTRAN (E-UTRAN) includes multiple evolved NBs (eNBs) for communicating with multiple UEs. LTE radio interface protocols include an access stratum (AS) layer and a non-access stratum (NAS) layer. The AS layer includes a physical layer (L1), a data link layer (L2) and a network layer (L3). The network layer controls a radio resource control (RRC layer). The data link layer includes a packet data convergence protocol (PDCP), a radio link control (RLC) and a medium access control (MAC). The NAS layer handles the communication between the UE and the core network (CN) which includes a mobility management entity (MME), a serving gateway and other devices.

Multimedia Broadcast Multicast Service (MBMS) is a Point-to-Multipoint (PTM) interface specification designed to provide efficient delivery of broadcast and multicast services within 3GPP cellular networks. Examples of MBMS interface specifications include those described in UMTS and LTE communication specifications. For broadcast transmission across multiple cells, the specifications define transmission over single-frequency network configurations. Intended applications include mobile TV, news, radio broadcasting, file delivery, emergency alerts, and others. When services are broadcasted by MBMS, all cells inside a multimedia broadcast multicast service single frequency network (MBSFN) area transmit the same MBMS service. Meanwhile, MBMS supports two logical channels for PTM downlink transmissions: a multicast control channel (MCCH) and a multicast traffic channel (MTCH), both of which are mapped to an MBMS transport channel, such as a multicast channel (MCH). The MCCH is used for transmitting all MBMS control messages within the MBSFN area, while the MTCH is used for transmitting the MBMS session data.

The base station may broadcast a system information block 13 (SIB13) message and an MBSFNAreaConfiguration message in order to notify the sub-frames assigned to MBMS transmission and related configuration settings, based on which a multi-cell/multicast coordinate entity (MCE) may manage MBMS resources.

In order to acquire the amount of UEs which are using or interested in MBMS services (hereafter as MBMS-active UEs), the base station is configured to initiate a counting procedure by sending a CountingRequest message. According to related 3GPP specifications, a UE can receive MBMS contents when operating in a radio resource control (RRC) connected mode or an RRC idle mode. However, only the UE operating in the RRC connected mode is able to reply the CountingRequest message sent by the base station. Therefore the prior art method of performing the MBMS counting procedure fails to provide an accurate result of the amount of UEs which are using or interested in MBMS services.

US 2013/107784 A1 teaches an idle mode counting procedure for MBMS systems operating in accordance with a 3GPP LTE communication specification includes sending an idle mode downlink message with an idle mode counting request identifying a point-to-multipoint (PTM) compatible service. The idle mode downlink message can be received by wireless communication devices in idle mode and includes an idle mode counting request identifying a PTM compatible service. Idle mode counting request response messages are received from wireless communication devices where the idle mode counting request response messages are transmitted by wireless communication devices that were in the idle mode at the time the downlink message was sent. Each idle mode counting request response message indicates that the communication device sending the idle mode counting request response message should be counted for the PTM compatible service.

### Summary of the Invention

The present invention aims at providing a method of performing an MBMS counting procedure in a wireless communication system which includes a base station and a user equipment for providing an accurate result of the amount of user equipment which are using or interested in MBMS services.

This is achieved by methods of performing an MBMS counting procedure in a wireless communication system which includes a base station and a user equipment according to claims 1 and 9. The dependent claims pertain to corresponding further developments and improvements.

As will be seen more clearly from the detailed description following below, the claimed method performs an MBMS counting procedure in a wireless communication system which includes a base station and a user equipment. The method includes the base station setting at least one reserved bit in a DCI format of a PDCCH, wherein the at least one reserved bit is associated with a specific operation mode of the user equipment which the base station designates as a responding operation mode; the base station transmitting an M-RNTI associated with the DCI format via the PDCCH using a downlink bandwidth; and the base station transmitting a counting request message via an MCCH.

As will be seen more clearly from the detailed description following below, the claimed method performs an MBMS counting procedure in a wireless communication system which includes a base station and a user equipment. The method includes the base station transmitting an M-RNTI via a PDCCH; the base station determining whether to insert an indicator bit into a counting request message based on a specific operational mode of the user equipment which the base station designates as a responding operation mode; and the base station transmitting the counting request message via an MCCH.

### Brief Description of the Drawings

In the following, the invention is further illustrated by way of example, taking reference to the accompanying drawings.
FIG. 1 is a diagram illustrating a wireless communication system according to an embodiment of the present invention.
FIG. 2 is a diagram illustrating a communication device according to an embodiment of the present invention.
FIG. 3 is a diagram illustrating a program code applied to an LTE system according to an embodiment of the present invention.
FIG. 4 is a flowchart illustrating a method of performing an MBMS counting procedure in an LTE system according to an embodiment of the present invention.
FIG. 5 is a flowchart illustrating a method of performing an MBMS counting procedure in an LTE system according to an embodiment of the present invention.

### Detailed Description

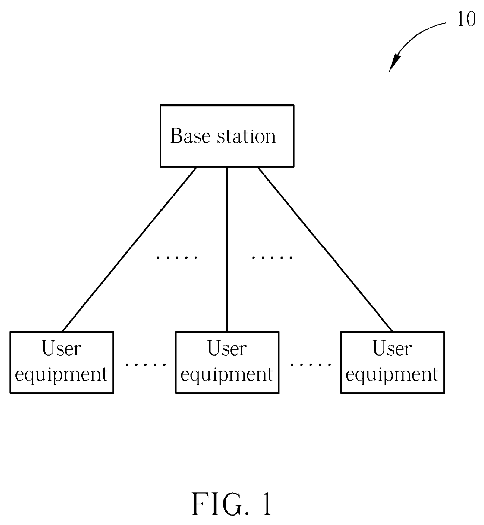

FIG. 1 is a diagram illustrating a wireless communication system 10 according to an embodiment of the present invention. The wireless communication system 10, including a base station and multiple UEs, may preferably be an LTE system or another network system which supports multiple components carriers. In the LTE system, the base station may be an eNB of the EUTRAN. Each UE may include electronic devices, such as mobile telephones, personal digital assistants, handheld, tablet, nettop, or laptop computers, or other devices with similar telecommunication capabilities. However, the types of the base station and the UEs do not limit the scope of the present invention. Also, the base station and each UE may either be a transmitter or a receiver. For uplink (UL) transmissions, the UEs are transmitters and the base station is a receiver for. For downlink (DL) transmissions, the base station is a transmitter and the UEs are receivers.

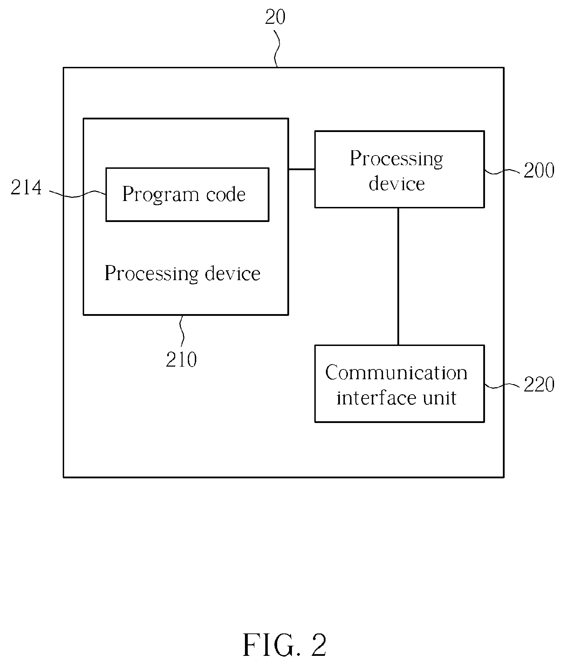

FIG. 2 is a diagram illustrating a communication device 20 according to an embodiment of the present invention. The communication device 20, which may be the UE or the base station depicted in FIG. 1, includes a processing device 200, a storage unit 210 and a communication interface unit 220. The processing device 200 may be a microprocessor or an application-specific integrated circuit (ASIC). The storage unit 210 may be any data storage device capable of storing a program code 214 which may be accessed and executed by the processing device 200. For example, the storage unit 210 may be a subscriber identity module (SIM) card, read-only memory (ROM), random-access memory (RAM), a CD-ROM, a magnetic tape, a floppy disk, or an optical data storage device. The communication interface unit 220 may be a wireless transceiver configured to communicate with other devices wirelessly and convert the computation result of the processing device 200 into wireless signals.

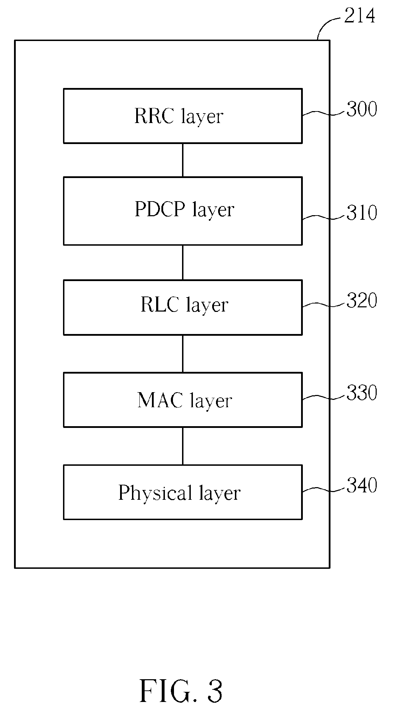

FIG. 3 is a diagram illustrating the program code 214 applied to the LTE system according to an embodiment of the present invention. The program code 214 includes codes associated with a plurality of communication protocol layers which are, from top to bottom, an RRC layer 300, a PDCP layer 310, an RLC layer 320, a MAC layer 330, and a physical layer 340. The physical layer 340 includes a plurality of physical channels, such as a physical random access channel (PRACH), a physical uplink control channel (PUCCH), a physical uplink shared channel (PUSCH), a physical downlink control channel (PDCCH) and a physical downlink shared channel (PDSCH), etc.

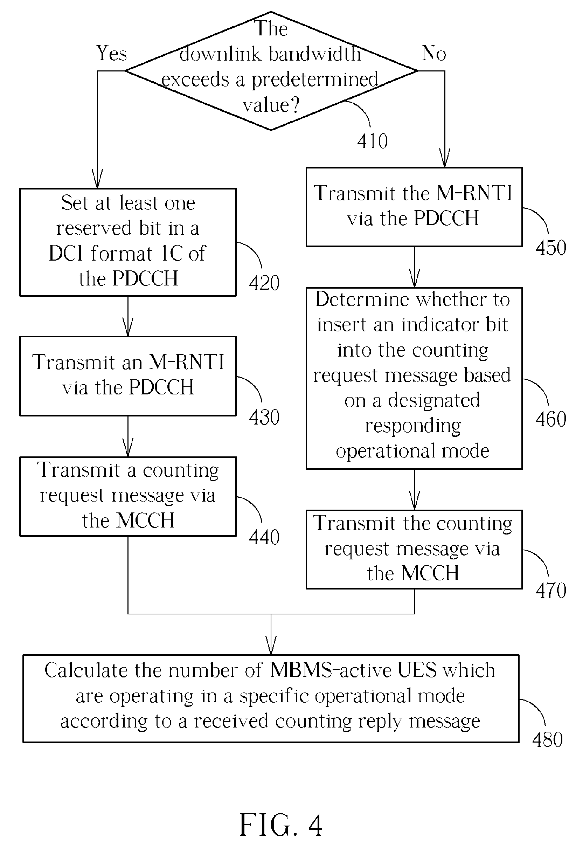

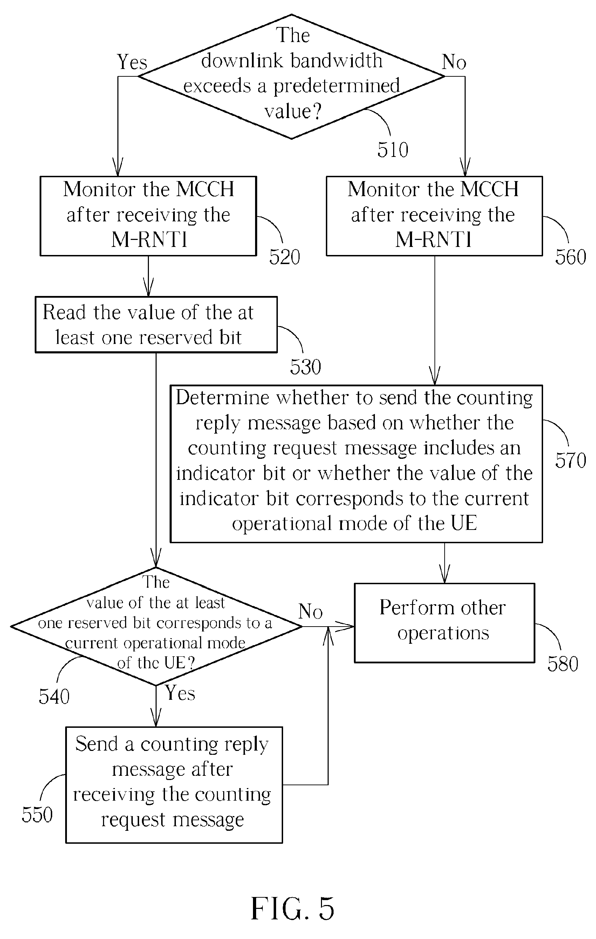

FIGs. 4 and 5 are flowcharts illustrating methods of performing a MBMS counting procedure in an LTE system according to an embodiment of the present invention. FIG. 4 illustrates the operation of the base station which may be installed with the program code 214 for executing the following steps:
- Step 410:: determine if the downlink bandwidth exceeds a predetermined value; if yes, execute step 420; if no, execute step 450.
- Step 420:: set at least one reserved bit in a downlink control information (DCI) format 1C of the PDCCH; execute step 430.
- Step 430:: transmit an MBMS radio network temporary identifier (M-RNTI) via the PDCCH; execute step 440.
- Step 440:: transmit a counting request message via the MCCH; execute step 480.
- Step 450:: transmit the M-RNTI via the PDCCH; execute step 460.
- Step 460:: determine whether to insert an indicator bit into the counting request message based on a designated responding operational mode; execute step 470.
- Step 470:: transmit the counting request message via the MCCH; execute step 480.
- Step 480:: calculate the number of MBMS-active UES which are operating in a specific operational mode according to a received counting reply message.

FIG. 5 illustrates the operation of the UE which may be installed with the program code 214 for executing the following steps:
- Step 510:: determine if the downlink bandwidth exceeds a predetermined value; if yes, execute step 520; if no, execute step 560.
- Step 520:: monitor the MCCH after receiving the M-RNTI; execute step 530.
- Step 530:: read the value of the at least one reserved bit; execute step 540.
- Step 540:: determine if the value of the at least one reserved bit corresponds to a current operational mode of the UE; if yes, execute step 550; if no, execute step 580.
- Step 550:: send a counting reply message after receiving the counting request message; execute step 580.
- Step 560:: monitor the MCCH after receiving the M-RNTI; execute step 570.
- Step 570:: determine whether to send the counting reply message based on whether the counting request message includes an indicator bit or whether the value of the indicator bit corresponds to the current operational mode of the UE; execute step 580.
- Step 580:: perform other operations.

The following table illustrates an embodiment of the DCI 1C format of the PDCCH. The M-RNTI is arranged to signal changes in the MCCH using 8 bits in the DCI 1C format. When the downlink bandwidth exceeds 1.4 MHz, the DCI 1C format includes at least 2 reserved bits.

| Name | Length(bits) | Frequency(MHz) |
|---|---|---|
| MCCH change notification | 8 | |
| Reserved bit | | 1.4 |
| | 2 | 3 |
| | 4 | 5 |
| | 5 | 10 |
| | 6 | 15 |
| | 7 | 20 |

When it is determined in steps 410 and 510 that the downlink bandwidth exceeds 1.4 MHz, the base station is configured to set one or multiple reserved bits in the DCI format 1C in step 420, transmit the M-RNTI via the PDCCH in step 430, and transmit the counting request message via the MCCH in step 440. After receiving the M-RNTI in step 520, all MBMS-active UEs can be notified of changes in the MCCH. The MCCH changes may be caused by the MBMS counting request, or by the state variation during the MBMS session (such as activating/terminating the MBMS session). Therefore all MBMS-active UEs are configured to monitor the MCCH in step 520 and read the value of the one or multiple reserved bits in step 530. However, a specific UE is configured to send the counting reply message in response to the counting request message in step 550 only after determining that the value of the at least one reserved bit corresponds to the current operational mode of the specific UE in step 540.

In a wideband embodiment of the present invention (such as when the downlink bandwidth exceeds 1.4 MHz), if the base station sets two reserved bits (R1, R2) in the DCI format 1C as (0, 0), all MBMS-active UEs are configured to monitor the MCCH after receiving the M-RNTI, but only the MBMS-active UEs which are currently operating in the RRC connected mode are configured to send the counting reply message after receiving the counting request message. Therefore the base station may acquire the number of MBMS-active UEs which are currently operating in the RRC connected mode in step 480.

In another wideband embodiment of the present invention (such as when the downlink bandwidth exceeds 1.4 MHz), if the base station sets two reserved bits (R1, R2) in the DCI format 1C as (0, 1), all MBMS-active UEs are configured to monitor the MCCH after receiving the M-RNTI, but only the MBMS-active UEs which are currently operating in the RRC idle mode are configured to send the counting reply message after receiving the counting request message. Therefore the base station may acquire the number of MBMS-active UEs which are currently operating in the RRC idle mode in step 480.

In another wideband embodiment of the present invention (such as when the downlink bandwidth exceeds 1.4 MHz), if the base station sets two reserved bits (R1, R2) in the DCI format 1C as (1, 0), all MBMS-active UEs are configured to monitor the MCCH after receiving the M-RNTI and send the counting reply message after receiving the counting request message. Therefore the base station may acquire the number of all MBMS-active UEs in step 480.

When it is determined in steps 410 and 510 that the downlink bandwidth does not exceed 1.4 MHz, the base station is configured to transmit the M-RNTI via the PDCCH in step 450, insert the indicator bit into the counting request message according to the designated responding operational mode, and transmit the counting request message via the MCCH in step 470. All MBMS-active UEs are configured to monitor MCCH after receiving the M-RNTI in step 560. After receiving the counting request message in step 570, all MBMS-active UEs are configured to determine whether to send the counting reply message based on whether the counting request message includes the indicator bit or whether the value of the indicator bit corresponds to the current operational mode of the UEs.

In a narrowband embodiment of the present invention (such as when the downlink bandwidth does not exceed 1.4 MHz), no indicator bit is inserted into the counting request message in step 460 if the base station only needs to calculate the number of MBMS-active UEs which are currently operating in the RRC connected mode. After receiving the M-RNTI in step 560, all MBMS-active UEs are configured to monitor the MCCH and may determine that the counting request message received in step 570 does not include any indicator bit. Under such circumstance, only the MBMS-active UEs which are currently operating in the RRC connected mode are configured to send the counting reply message after receiving the counting request message. Therefore the base station may acquire the number of MBMS-active UEs which are currently operating in the RRC connected mode in step 480.

In another narrowband embodiment of the present invention (such as when the downlink bandwidth does not exceed 1.4 MHz), an indicator bit of 0 may be inserted into the counting request message in step 460 if the base station only needs to calculate the number of MBMS-active UEs which are currently operating in the RRC idle mode. After receiving the M-RNTI in step 560, all MBMS-active UEs are configured to monitor the MCCH and may determine that the counting request message received in step 570 include the indicator bit of 0. Under such circumstance, only the MBMS-active UEs which are currently operating in the RRC idle mode are configured to send the counting reply message after receiving the counting request message. Therefore the base station may acquire the number of MBMS-active UEs which are currently operating in the RRC idle mode in step 480.

In another narrowband embodiment of the present invention (such as when the downlink bandwidth does not exceed 1.4 MHz), an indicator bit of 1 may be inserted into the counting request message in step 460 if the base station needs to calculate the number of all MBMS-active UEs. After receiving the M-RNTI in step 560, all MBMS-active UEs are configured to monitor the MCCH and may determine that the counting request message received in step 570 include the indicator bit of 1. Under such circumstance, all MBMS-active UEs are configured to send the counting reply message after receiving the counting request message. Therefore the base station may acquire the number of all MBMS-active UEs in step 480.

The above mentioned wideband and narrowband embodiments are merely illustrated examples of the present counting procedure. However, the method of setting the reserved bits and the relationship between the value of the reserved bits and the assigned responding operational mode do not limit the scope of the present invention.

In the present invention, the base station may request the MBMS-active UEs which are currently operating in the RRC idle mode to send the counting reply message using the reserved bits in the DCI format 1C or by inserting an indicator bit in the counting request message, thereby acquiring the accurate number of the MBMS-active UEs. Also, the base station may only request the MBMS-active UEs which are currently operating in a specific mode to send the counting reply message, thereby preventing resource congestion caused by all MBMS-active UEs simultaneously sending the counting reply message.

## Claims

1. A method of performing a Multimedia Broadcast Multicast Service, MBMS, counting procedure in a wireless communication system (10) which includes a base station (20) and a user equipment (20), the method comprising the steps of:
the base station (20) setting at least one reserved bit in a first downlink control information, DCI, format of a physical downlink control channel, PDCCH;
the base station (20) transmitting a first MBMS radio network temporary identifier, M-RNTI, associated with the first DCI format via the PDCCH using a first downlink bandwidth; and
the base station (20) transmitting a first counting request message via a multicast control channel, MCCH, the method
**characterized in that:**
the at least one reserved bit is associated with a specific operation mode of the user equipment (20) which the base station (20) designates as a responding operation mode; and
the user equipment (20) is configured to reply the first counting request message if a current operational mode of the user equipment (20) when receiving the first counting request message is the responding operation mode.

2. The method of claim 1, **further characterized by** comprising the further step of:
the user equipment (20) monitoring the MCCH after receiving the first M-RNTI;
the user equipment (20) reading a value of the at least one reserved bit; and
the user equipment (20) sending a counting reply message after receiving the first counting request message when the value of the at least one reserved bit corresponds to a current operational mode of the user equipment (20).

3. The method of any of the claims 1-2, further **characterized by** comprising the further step of:
the base station (20) setting a first reserved bit and a second reserved bit in the first DCI format for designating a radio resource control, RRC, connected mode, designating an RRC idle mode, or designating both the RRC connected mode and the RRC idle mode defined in a 3GPP specification.

4. The method of claim 1, further **characterized by** comprising the further step of:
the base station (20) transmitting a second M-RNTI associated with a second DCI format via the PDCCH using a second downlink bandwidth;
the base station (20) determining whether to insert an indicator bit into a second counting request message based on the specific operational mode; and
the base station (20) transmitting the second counting request message via the MCCH.

5. The method of claim 4, further **characterized by** comprising the further step of:
the user equipment (20) monitoring the MCCH after receiving the second M-RNTI; and
the user equipment (20) determining whether to send a counting reply message in response to the second counting request message based on whether the second counting request message includes the indicator bit or whether the value of the indicator bit corresponds to a current operational mode of the user equipment (20).

6. The method of claim 4, **characterized in that:**
the base station (20) does not insert the indicator bit into the second counting request message for designating an RRC connected mode defined in a 3GPP specification;
the base station (20) inserts the indicator bit of a first value into the second counting request message for designating an RRC idle mode defined in the 3GPP specification; and
the base station (20) inserts the indicator bit of a second value into the second counting request message for designating both the RRC connected mode and the RRC idle mode.

7. The method of any of the claims 4-6, **characterized in that** the first downlink bandwidth is larger than the second downlink bandwidth.

8. The method of any of the claims 1-7, **characterized in that** the first DCI format is a DCI 1C format defined in a defined in a 3rd Generation Partnership Project specification.

9. A method of performing an MBMS counting procedure in a wireless communication system (10) which includes a user equipment (20) and a base station (20) configured to transmit an M-RNTI via a PDCCH and transmit a counting request message via an MCCH, the method **characterized in that** it comprises the step of:
the base station (20) determining whether to insert an indicator bit into the counting request message based on a specific operational mode of the user equipment (20) which the base station (20) designates as a responding operation mode, wherein the user equipment (20) is configured to reply the counting request message if a current operational mode of the user equipment (20) when receiving the counting request message is the responding operation mode.

10. The method of claim 9, **further characterized by** comprising the further step of:
the user equipment (20) monitoring the MCCH after receiving the M-RNTI; and
the user equipment (20) determining whether to send a counting reply message in response to the counting request message based on whether the counting request message includes the indicator bit or whether the value of the indicator bit corresponds to a current operational mode of the user equipment (20).

11. The method of any of the claims 9-10, **characterized in that:**
the base station (20) does not insert the indicator bit into the counting request message for designating an RRC connected mode defined in a 3GPP specification;
the base station (20) inserts the indicator bit of a first value into the counting request message for designating an RRC idle mode defined in the 3GPP specification; and
the base station (20) inserts the indicator bit of a second value into the counting request message for designating both the RRC connected mode and the RRC idle mode.

## Patentansprüche

1. Verfahren zur Durchführung eines Multimedia Broadcast Multicast Service, MBMS, Zählverfahrens in einem Drahtlos-Kommunikationssystem (10), welches eine Basisstation (20) und eine Nutzer-Ausrüstung (20) beinhaltet, wobei das Verfahren die Schritte umfasst:
die Basisstation(20) stellt mindestens ein reserviertes Bit in ein erstes Downlink Steuer-Informations-, DCI, Format eines physikalischen Downlink Steuer-Kanals, PDCCH ein;
die Basisstation(20) überträgt einen ersten temporären MBMS Funknetzwerk-Identifikator, M-RNTI, der mit dem ersten DCI-Format über den PDCCH unter Verwendung einer ersten Downlink-Bandweite assoziiert ist; und
die Basisstation(20) überträgt eine erste Zählanfrage-Nachricht über ein Multicast-Steuer-Kanal, MCCH, wobei das Verfahren **dadurch gekennzeichnet ist, dass**:
das mindestens eine reservierte Bit mit einem bestimmen Betriebsmodus der Nutzerausrüstung (20) assoziiert ist, das die Basisstation (20) als einen antwortenden Betiebsmodus bezeichnet; und
die Nutzerausrüstung (20) ausgestaltet ist, auf die erste Zähl-Anfrage-Nachricht zu antworten, wenn ein gegenwärtiger Betriebs-Modus der Nutzerausrüstung (20) bei Empfang der ersten Zähl-Anfrage-Nachricht der Antwort-Betriebsmodus ist.

2. Verfahren nach Anspruch 1, weiter **dadurch gekennzeichnet, dass** es den weiteren Schritt umfasst:
die Nutzerausrüstung (20) überwacht den MCCH nach Empfang der ersten M-RNTI;
die Nutzerausrüstung (20) liest einen Wert des mindestens einen reservierten Bits; und
die Nutzerausrüstung (20) sendet eine Zähl-Antwort-Nachricht nach Empfang der ersten Zähl-Anfrage-Nachricht, wenn der Wert des mindestens einen reservierten Bits einem gegenwärtigen Betriebs-Modus der Nutzerausrüstung (20) entspricht.

3. Verfahren nach einem der Ansprüche 1-2, weiter **dadurch gekennzeichnet, dass**:
die Basisstation(20) stellt ein erstes reserviertes Bit und ein zweites reserviertes Bit in das erste DCI-Format ein, um einen Funk-Ressourcen-Steuerung, RRC, Verbindungs-Modus zu bezeichnen, um einen RRC ungenutzten-Modus zu bezeichnen, oder um beide, den RRC-Verbindungszustand und den ungenutzten RCC-Modus, definiert in einer 3GPP-Spezifikation, zu bezeichnen.

4. Verfahren nach Anspruch 1, weiter **dadurch gekennzeichnet, dass** es den weiteren Schritt umfasst :
die Basisstation (20) überträgt ein zweites M-RNTI, das mit einem zweiten DCI-Format assoziiert ist, über den PDCCH unter Verwendung einer zweiten Downlink-Bandweite;
die Basisstation(20) bestimmt, ob ein Indikator-Bit in eine zweite Zähl-Anfrage-Nachricht basierend auf dem bestimmten Betriebs-Modus inseriert werden soll; und
die Basisstation(20) überträgt die zweite Zähl-Anfrage-Nachricht über den MCCH.

5. Verfahren nach Anspruch 4, weiter **dadurch gekennzeichnet, dass** es die Schritte umfasst:
die Nutzerausrüstung (20) überwacht den MCCH nach Empfang des zweiten M-RNTI; und
die Nutzerausrüstung (20) bestimmt, ob eine Zähl-Antwort-Nachricht als Antwort auf die zweite Zähl-Anfrage-Nachricht geschickt werden soll, basierend darauf, ob die zweite Zähl-Anfrage-Nachricht den Indikator-Bit enthält oder ob der Wert des Indikator-Bits einem gegenwärtigen Betriebs-Modus der Nutzerausrüstung (20) entspricht.

6. Verfahren nach Anspruch 4, **gekennzeichnet durch**:
die Basisstation (20) inseriert den Indikator-Bit nicht in die zweite Zahl-Anfrage-Nachricht, um einen verbundenen RRC-Modus, definiert in einer 3GPP-Speziifikation, zu kennzeichnen;
die Basisstation(20) inseriert den Indikator-Bit eines ersten Werts in die zweite Zähl-Anfrage-Nachricht, um einen unverbundenen RRC-Modus, definiert in der 3GPP-Speziifikation, zu kennzeichnen; und
die Basisstation(20) inseriert den Indikator-Bit eines zweiten Werts in die zweite Zähl-Anfrage-Nachricht, um sowohl den verbundenen RCC-Modus als auch den unverbundenen RRC-Modus zu kennzeichnen.

7. Verfahren nach einem der Ansprüche 4-6, **dadurch gekennzeichnet, dass** die erste Downlink-Bandweite größer ist als die zweite Downlink-Bandweite.

8. Verfahren nach einem der Ansprüche 1-7, **dadurch gekennzeichnet, dass** das erste DCI-Format ein DCI IC-Format ist, definiert in einer definierten Partnerschafts-Projekt-Spezifikation der 3. Generation.

9. Verfahren zur Durchführung eines MBMS-Zählverfahrens in einem Drahtlos-Kommunikations-System (10), welches eine Nutzerausrüstung (20) und eine Basisstation (20) umfasst, die ausgestaltet ist, eine M-RNTI über einen PDCCH zu übertragen und eine Zähl-Anfrage-Nachricht über einen MCCH zu übertragen, wobei das Verfahren **dadurch gekennzeichnet ist, dass** es die Schritte umfasst:
die Basisstation (20) bestimmt, ob ein Indikator-Bit in die Zähl-Anfrage-Nachricht basierend auf einem spezifischem Betriebs-Modus der Nutzerausrüstung (20) inseriert werden soll, welches die Basisstation (20) als einen Antwort-Betriebs-Modus bezeichnet, worin die Nutzerausrüstung (20) ausgestaltet ist, auf die Zähl-Anfrage-Nachricht zu antworten, wenn ein gegenwärtiger Betriebs-Modus der Nutzerausrüstung (20) beim Empfang der Zähl-Anfrage-Nachricht in dem Antwort-Betriebs-Modus ist.

10. Verfahren nach Anspruch 9, weiter **dadurch gekennzeichnet, dass** es den weiteren Schritt umfasst:
die Nutzerausrüstung (20) überwacht den MCCH nach Empfang der M-RNTI; und
die Nutzerausrüstung (20) bestimmt, ob sie eine Zähl-Antwort-Nachricht als Antwort auf die Zähl-Anfrage-Nachricht sendet, basierend darauf, ob die Zähl-Anfrage-Nachricht den Indikator-Bit enthält, oder ob der Wert des Indikator-Bits einem gegenwärtigen Betriebs-Modus der Nutzerausrüstung (20) entspricht.

11. Verfahren nach einem der Ansprüche 9-10, **dadurch gekennzeichnet, dass**:
die Basisstation(20) den Indikator-Bit nicht in die Zähl-Anfrage-Nachricht inseriert, um einen verbundenen RRC-Modus, definiert in einer 3GPP-Spezifikation, zu kennzeichnen;
die Basisstation(20) den Indikator-Bit eines ersten Wertes in die Zähl-Anfrage-Nachricht inseriert, um einen nicht verbundenen RRC-Modus, definiert in der 3GPP-Spezifikation, zu kennzeichnen; und
die Basisstation(20) den Indikator-Bit eines zweiten Werts in die Zähl-Anfrage-Nachricht inseriert, um sowohl den verbundenen RRC-Modus als auch den nicht verbundenen RRC-Modus zu kennzeichnen.

## Revendications

1. Procédé pour effectuer une procédure de comptage de service de multidiffusion diffusion multimédia, MBMS, dans un système de communication sans fil (10) qui inclut une station de base (20) et un équipement d'utilisateur (20), le procédé comprenant les étapes consistant à :
régler par la station de base (20) au moins un bit réservé dans un premier format d'information de commande en liaison descendante, DCI, d'un canal de commande de liaison descendante physique, PDCCH ;
transmettre par la station de base (20) un premier identifiant temporaire de réseau radio MBMS, M-RNTI, associé au premier format DCI via le PDCCH en utilisant une première bande passante de liaison descendante ; et
transmettre par la station mobile (20) un premier message de demande de comptage via un canal de commande de multidiffusion, MCCH, le procédé étant **caractérisé en ce que** :
au moins un bit réservé est associé à un mode de fonctionnement spécifique de l'équipement d'utilisateur (20) que la station de base (20) désigne comme un mode de fonctionnement de réponse ; et
l'équipement d'utilisateur (20) est configuré pour répondre au premier message de demande de comptage si un mode opérationnel actuel de l'équipement d'utilisateur (20) lors de la réception du premier message de demande de comptage est le mode de fonctionnement de réponse.

2. Procédé selon la revendication 1, **caractérisé en outre en ce qu'**il comprend l'étape supplémentaire consistant à :
surveiller par l'équipement d'utilisateur (20) le MCCH après la réception du premier M-RNTI ;
lire par l'équipement d'utilisateur (20) une valeur d'au moins un bit réservé ; et
envoyer par l'équipement d'utilisateur (20) un message de réponse au comptage après la réception du premier message de demande de comptage lorsque la valeur d'au moins un bit réservé correspond à un mode opérationnel actuel de l'équipement d'utilisateur (20).

3. Procédé selon une quelconque des revendications 1-2, **caractérisé en outre en ce qu'**il comprend l'étape supplémentaire consistant à :
régler par la station de base (20) un premier bit réservé et un second bit réservé dans le premier format DCI pour désigner un mode connecté de commande de ressource radio, RRC, désignant un mode de repos RRC ou désignant à la fois le mode connecté RRC et le mode de repos RRC défini dans une spécification 3GPP.

4. Procédé selon la revendication 1, **caractérisé en outre en ce qu'**il comprend l'étape supplémentaire consistant à :
transmettre par la station de base (20) un second M-RNTI associé à un second format DCI via le PDCCH en utilisant une seconde bande passante de liaison descendante ;
déterminer par la station de base (20) si insérer un bit indicateur dans un second message de demande de comptage sur la base du mode opérationnel spécifique ; et
transmettre par la station de base (20) le second message de demande de comptage via le MCCH.

5. Procédé selon la revendication 4, **caractérisé en outre en ce qu'**il comprend l'étape supplémentaire consistant à :
surveiller par l'équipement d'utilisateur (20) le MCCH après la réception du second M-RNTI ; et
déterminer par l'équipement d'utilisateur (20) si envoyer un message de réponse au comptage en réponse au second message de demande de comptage sur la base de ce que le second message de demande de comptage inclut le bit indicateur ou que la valeur du bit indicateur correspond à un mode opérationnel actuel de l'équipement d'utilisateur (20).

6. Procédé selon la revendication 4, **caractérisé en ce que** :
la station de base (20) n'insère pas le bit indicateur dans le second message de demande de comptage pour désigner un mode connecté RRC défini dans une spécification 3GPP ;
la station de base (20) insère le bit indicateur d'une première valeur dans le second message de demande de comptage pour désigner un mode de repos RRC défini dans la spécification 3GPP ; et
la station de base (20) insère le bit indicateur d'une seconde valeur dans le second message de demande de comptage pour désigner à la fois le mode connecté RRC et le mode de repos RRC.

7. Procédé selon une quelconque des revendications 4-6, **caractérisé en ce que** la première bande passante de liaison descendantes est plus grande que la seconde bande passante de liaison descendante.

8. Procédé selon une quelconque des revendications 1-7, **caractérisé en ce que** le premier format DCI est un format DCI 1C défini dans une spécification 3rd Generation Partnership Project.

9. Procédé pour effectuer une procédure de comptage MBMS dans un système de communication sans fil (10) qui inclut un équipement d'utilisateur (20) et une station de base (20) configurés pour transmettre yb M-RNTI via un PDCCH et transmettre un message de demande de comptage via un MCCH, le procédé étant **caractérisé en ce qu'**il comprend les étapes consistant à :
déterminer par la station de base (20) si insérer un bit indicateur dans le message de demande de comptage sur la base d'un mode opérationnel spécifique de l'équipement d'utilisateur (20) que la station de base (20) désigne comme un mode de fonctionnement de réponse,
dans lequel l'équipement d'utilisateur (20) est configuré pour répondre au message de demande de comptage si un mode opérationnel actuel de l'équipement d'utilisateur (20) lors de la réception du message de demande de comptage est le mode de fonctionnement de réponse.

10. Procédé selon la revendication 9, **caractérisé en outre en ce qu'**il comprend l'étape supplémentaire consistant à :
surveiller par l'équipement d'utilisateur (20) le MCCH après la réception du second M-RNTI ; et
déterminer par l'équipement d'utilisateur (20) si envoyer un message de réponse au comptage en réponse au second message de demande de comptage sur la base de ce que le second message de demande de comptage inclut le bit indicateur ou que la valeur du bit indicateur correspond à un mode opérationnel actuel de l'équipement d'utilisateur (20).

11. Procédé selon une quelconque des revendications 9-10, **caractérisé en ce que** :
la station de base (20) n'insère pas le bit indicateur dans le second message de demande de comptage pour désigner un mode connecté RRC défini dans une spécification 3GPP ;
la station de base (20) insère le bit indicateur d'une première valeur dans le second message de demande de comptage pour désigner un mode de repos RRC défini dans la spécification 3GPP ; et
la station de base (20) insère le bit indicateur d'une seconde valeur dans le second message de demande de comptage pour désigner à la fois le mode connecté RRC et le mode de repos RRC.
